# FASCICULE DE BREVET EUROPEEN

(11) **EP 1 247 680 B1**
(45) Date de publication et mention de la délivrance du brevet: **07.09.2005**
(21) Numéro de dépôt: 02290844.6
(22) Date de dépôt: 05.04.2002
(51) Int. Cl.: B60K 11/04

(54) **Fixation d'un échangeur de chaleur de véhicule automobile**
Befestigung eines Kraftfahrzeugwärmetauschers
Fixation for motor vehicle heat exchanger

(30) Priorité: 06.04.2001 FR 0104694
(43) Date de publication de la demande: 09.10.2002
(73) Titulaire: Renault s.a.s., 92100 Boulogne Billancourt (FR)
(72) Inventeur: Dabrowski, Laurent, 78000 Versailles (FR); Vigliecca, Jean-François, 78990 Elancourt (FR)

(56) Documents cités:
- EP-A- 1 106 413
- DE-A- 10 008 638

## Description

La présente invention concerne une fixation pour un échangeur, notamment un radiateur, de véhicule automobile, selon le préambule de la revendication 1, comme connu par DE-A-10008638.

Le radiateur de véhicule automobile est généralement situé dans le compartiment avant du véhicule, et monté sur des traverses par l'intermédiaire de moyens de fixation, au moins en partie élastiques, qui réduisent la transmission de vibrations. Le radiateur peut, par exemple, reposer sur une traverse inférieure par l'intermédiaire de deux fixations et être relié à une traverse supérieure par deux autres fixations.

Une volonté actuelle des constructeurs automobiles est de diminuer le plus possible le coût des réparations dans le cas de chocs avant de faibles amplitudes. Pour ce faire, on cherche à éviter le plus possible toutes détériorations de composants, notamment le radiateur, devant entraîner leur remplacement.

Une possibilité consiste à utiliser des moyens de fixation, par exemple des clips, qui permettent de désolidariser le radiateur des traverses inférieure et supérieure lorsqu'un effort d'amplitude suffisante est appliqué sur le module, ce qui peut être le cas lors d'un choc avant. Cet effort suffisant est déterminé pour être d'amplitude inférieure à l'effort qu'il faudrait pour endommager le radiateur. Néanmoins, le radiateur, une fois libéré, peut se déplacer sur des courses importantes et venir impacter avec les éléments du compartiment avant situé derrière lui et être ainsi abîmé.

La présente invention vise à obtenir des fixations améliorées permettant un déplacement relatif de course limitée d'un échangeur, notamment le radiateur, par rapport aux traverses le supportant.

Dans ce but, elle propose un plot de fixation selon la revendication 1.

Selon l'invention, le second alésage traverse de part en part le plot et est au moins en partie recouvert au niveau de l'une de ses extrémités par un opercule.

Selon une autre caractéristique de l'invention, le plot est monobloc et constitué d'un matériau élastique.

Selon une autre caractéristique de l'invention, les premier et deuxième logements sont des alésages, et l'élément complémentaire est un pion. En outre, le passage est un évidement reliant les deux alésages, dont la section droite, selon la direction privilégiée est de dimensions, au moins en partie, inférieures à celles du pion, le pion venant déformer l'évidement lorsqu'il est soumis à l'effort, selon la direction privilégiée, d'amplitude dépassant le seuil déterminé.

Selon une autre caractéristique de l'invention, le plot comporte au moins un évidement supplémentaire le traversant au moins en partie.

Selon une autre caractéristique de l'invention, le plot comporte un corps principal et une base formant avec le corps principal un épaulement, la base étant insérée dans une ouverture réalisée dans la première pièce, l'épaulement venant en appui sur ladite première pièce. La base comporte, en outre, une bordure de retenue se projetant en saillie de la base, la dite première pièce étant clippée entre l'épaulement et la bordure de retenue.

Selon une autre caractéristique de l'invention, l'ouverture et la base ont des formes complémentaires et présentent une dissymétrie par rapport à un plan perpendiculaire à la direction privilégiée.

D'autres caractéristiques et avantages de l'invention apparaîtront à la lecture de la description qui va suivre en référence aux dessins dans lesquels :
- la figure 1 représente un schéma simplifié de la section d'un radiateur monté sur une traverse inférieure du compartiment avant d'un véhicule automobile,
- la figure 2 représente une vue en perspective de dessus du plot de fixation selon l'invention,
- la figure 3 représente une vue en perspective de dessous du plot de fixation selon l'invention,
- la figure 4 représente une vue de dessus du plot de fixation selon l'invention,
- la figure 5 représente une coupe de la figure 4,
- la figure 6 représente une vue de dessous du plot de fixation,
- la figure 7 représente une coupe de la figure 6.

Sur les différentes figures, l'axe X représente l'axe longitudinal naturel du véhicule automobile, orienté vers l'avant dudit véhicule, tandis que l'axe Z représente un axe vertical orienté vers le haut du véhicule.

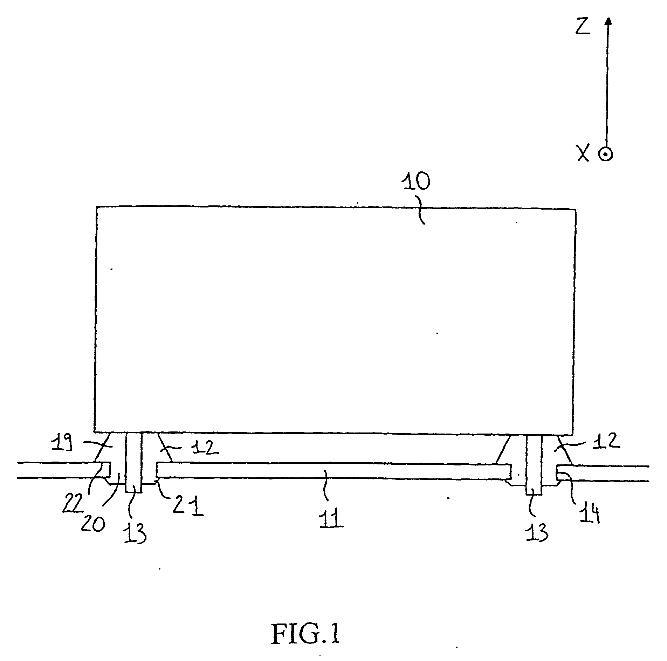

On peut voir, sur la figure 1, un radiateur 10 de véhicule automobile venant reposer sur une traverse 11 du véhicule, notamment une traverse inférieure du compartiment avant du véhicule, par l'intermédiaire de deux pions 13 solidaires de la paroi inférieure du radiateur 10, et qui coopèrent chacun avec un plot de fixation 12 monté sur une ouverture 14 réalisée dans la traverse 11. Le radiateur 10 est également fixé à une autre traverse (non représentée) dans sa partie supérieure par deux pions venant coopérer avec des plots de fixation sensiblement similaires à ceux montés sur la traverse inférieure 11.

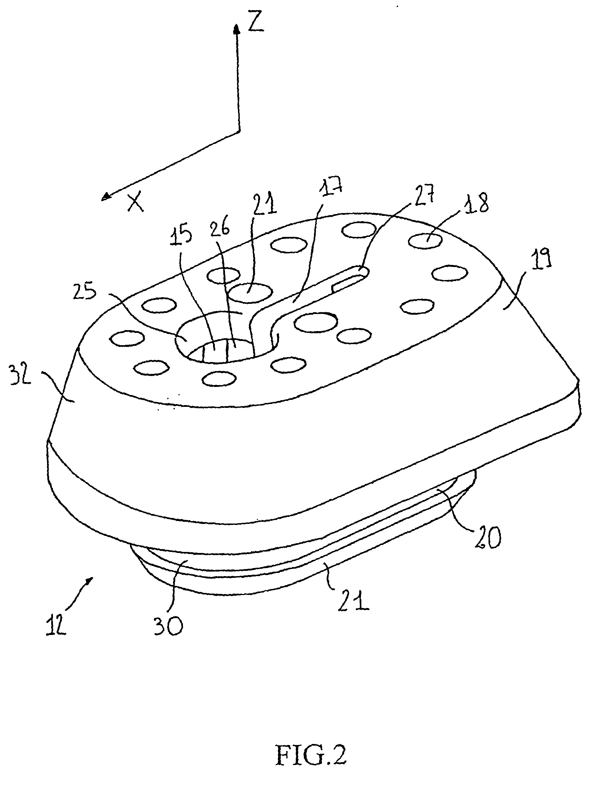

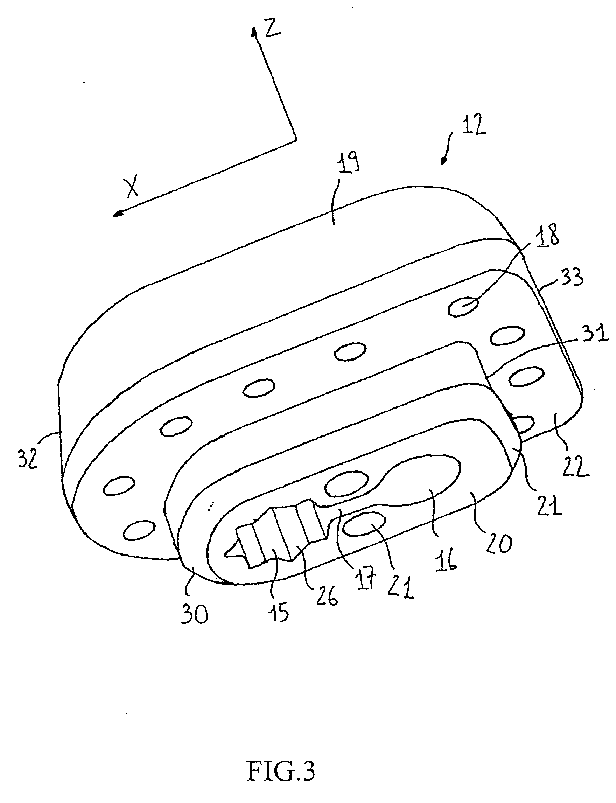

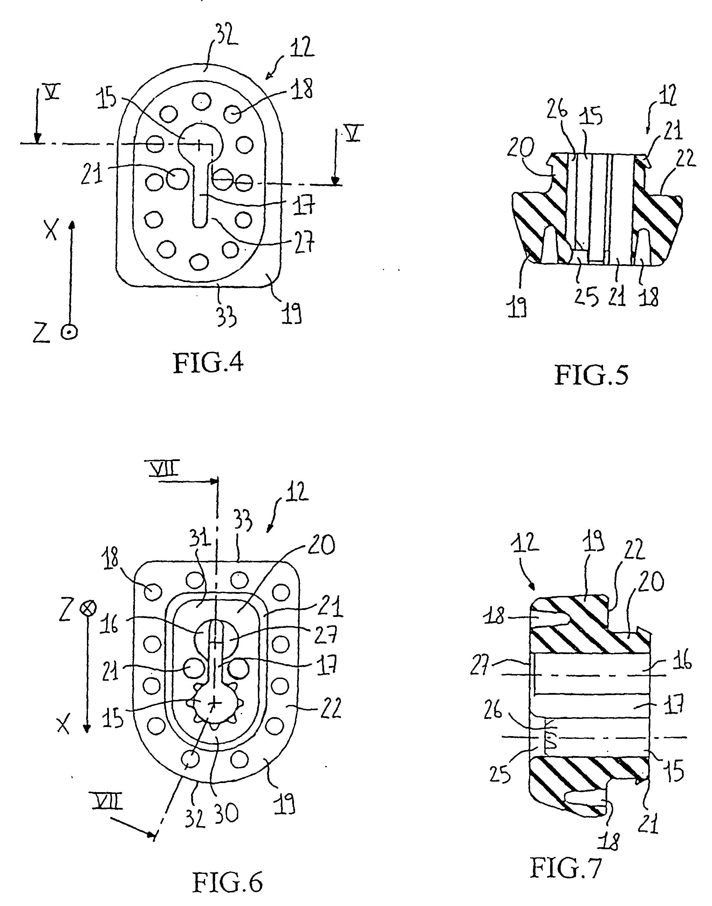

Tel que représenté sur les figures 2 à 7, le plot de fixation 12 se compose d'un élément monobloc en matériau élastique, le plot 12 étant orienté par rapport à X sur les figures 2 à 7 selon la position qu'il occupe sur la traverse inférieure 11 (non représentée sur les figures 2 à 7).

Le plot 12 comporte un corps principal 19 et une base 20. La jonction entre le corps principal 19 et la base 20 forme un épaulement 22 destiné à venir en appui sur la traverse inférieure 11. Une bordure de retenue 21, placée sur la base 20, permet de clipper celle-ci sur la traverse 11 de façon à éviter le retrait accidentel du plot 12, une fois placé sur l'ouverture 14 de la traverse 11, alors que le radiateur 10 n'a pas encore été mis en place. La base 20 présente, selon la direction X, une extrémité avant 30 sensiblement arrondie et une extrémité arrière 31 sensiblement plane. L'ouverture 14 possède une section complémentaire de celle de la base 20. De même, le corps principal, présente selon la direction X, une extrémité avant sensiblement arrondie 32 en opposition à son extrémité arrière 33 sensiblement plane.

Un premier alésage principal 15, d'axe sensiblement parallèle à Z, vient traverser de part en part le corps principal 19 et la base 20. Ce premier alésage principal 15 est destiné à recevoir le pion 13 du radiateur 10 lors du montage du radiateur 10 sur la traverse inférieure 11. Il présente une première partie évasée 25 se prolongeant par une deuxième partie 26 de section « en forme d'étoile », destinée à assouplir le plot de fixation 12. Un second alésage principal 16, d'axe parallèle à l'axe du premier alésage 15, traverse également la base 20 et une partie du corps principal 19. Il est toutefois en partie recouvert, au niveau de son extrémité débouchant au niveau du corps principal 19 par un opercule 27.

Les deux alésages principaux 15,16 sont reliés par un évidement principal 17, de section rectangulaire, qui traverse également de part en part le corps principal 19 et la base 20. Des évidements secondaires 18 sont répartis sur l'ensemble du corps principal 19 du plot de fixation 12, de façon à en faciliter la déformation sous l'action de forces extérieures. De même, deux alésages secondaires 21, d'axe parallèle aux axes des alésages principaux 15,16, viennent traverser de part en part le corps principal 19 et la base 20 du plot de fixation 12. Ils sont disposés de part et d'autre de l'évidement 17.

Le montage du radiateur 10 sur la traverse inférieure 11 est réalisé de la façon suivante : les deux plots de fixation 12 sont placés au préalable sur la traverse inférieure 11. Les formes non symétriques et complémentaires des ouvertures 14 et des bases 20 imposent une orientation spécifique pour le montage des plots 12 sur la traverse 11. En outre, de façon à éviter toute erreur ou perte de temps lors des manoeuvres de montage du plot 12 par l'opérateur, le corps principal 19 présente, lui aussi, une forme non symétrique, avec une extrémité arrondie selon la direction X, orientée du même côté que l'extrémité arrondie 30 de la base 20.

Chaque pion 13 du radiateur 10 est alors inséré dans le premier alésage principal 15 du plot 12, assurant le montage du radiateur 10 sur la traverse 11. L'opercule 27 vient camoufler, aux yeux de l'opérateur, la présence du deuxième alésage principal 16, réduisant ainsi tout risque de montage erroné.

En cas de choc avant, un effort peut venir s'appliquer sur le radiateur 10 (souvent par l'intermédiaire de la traverse inférieure 11 elle-même). Si cet effort est d'amplitude suffisante, et en particulier si l'effort résultant appliqué aux pions 13 selon la direction X est d'amplitude suffisante, chaque pion 13 se déplace depuis le premier alésage principal 15, appelé position 1, jusqu'au deuxième alésage principal 16, appelé position 2, par le biais de l'évidement principal 17 qui se déforme lors du passage du pion 13. Typiquement, la course ainsi réalisée par le pion 13, et qui correspond à l'entraxe entre les deux alésages principaux 15,16, est de l'ordre de 15 mm.

Globalement, le radiateur 10 recule d'une course égale à la course de chaque pion 13. Parvenu en fin de course, les plots 12 retiennent le radiateur 10, qui, ainsi, ne vient pas en contact avec des éléments du compartiment moteur situés derrière lui, selon la direction X. L'effort de passage, pour chaque pion, de la position 1 à la position 2 dépend du matériau constituant le plot 12 ainsi que la taille est la forme de l'évidement principal 17. Ainsi, par exemple, l'amplitude de l'effort nécessaire pour permettre le déplacement du pion croît avec la rigidité de la matière et diminue lorsque la section selon la direction X de l'évidement 17 augmente. L'amplitude de l'effort de passage est choisie de façon à ce que les pions 13 du radiateur 10 restent chacun dans la position 1 de leur plot 12 respectif lors du fonctionnement normal du véhicule.

La présente invention n'est nullement limitée au mode de réalisation décrit et illustré qui n'a été donné qu'à titre d'exemple. Au contraire, l'invention comprend tous les équivalents techniques des moyens décrits ainsi que leurs combinaisons si celles-ci sont effectuées dans le cadre des revendications.

## Revendications

1. Plot de fixation (12) monté sur une première pièce (11) et comportant un premier logement (15) recevant un élément complémentaire (13) d'une seconde pièce (10), et un second logement (16) relié au premier logement (15) par un passage (17), et situé en aval du premier logement (15) selon une direction privilégiée (X), l'élément complémentaire (13) pouvant se déplacer depuis le premier logement (15) pour venir occuper le second logement (16) en traversant le passage (17) lorsqu'il est soumis à un effort, selon la direction privilégiée (X), d'amplitude dépassant un seuil déterminé **caractérisé en ce que** le second logement (16) traverse de part en part le plot (12) et est au moins en partie recouvert au niveau de l'une de ses extrémités par un opercule (27).

2. Plot de fixation (12) selon la revendication 1, **caractérisé en ce qu'**il est monobloc et constitué d'un matériau élastique.

3. Plot de fixation (12) selon les revendications 1 ou 2, **caractérisé en ce que** les premier (15) et deuxième (16) logements sont des alésages, et l'élément complémentaire (13) est un pion.

4. Plot de fixation (12) selon la revendication 3, **caractérisé en ce que** le passage (17) est un évidement reliant les deux alésages (15,16), et dont la section droite, selon la direction privilégiée (X) est de dimensions, au moins en partie, inférieures à celles du pion (13).

5. Plot de fixation (12) selon la revendication 4, **caractérisé en ce que** le pion (13) vient déformer l'évidement (17) lorsqu'il est soumis à l'effort, selon la direction privilégiée (X), d'amplitude dépassant le seuil déterminé.

6. Plot de fixation (12) selon l'une quelconque des revendications 1 à 5, **caractérisé en ce qu'**il comporte au moins un évidement supplémentaire (18,21) le traversant au moins en partie.

7. Plot de fixation (12) selon l'une quelconque des revendications 1 à 6, **caractérisé en ce qu'**il comporte un corps principal (19) et une base (20) formant avec le corps principal (19) un épaulement (22), la base (20) étant insérée dans une ouverture (14) réalisée dans la première pièce (11), l'épaulement (22) venant en appui sur ladite première pièce (11).

8. Plot de fixation (12) selon la revendication 7, **caractérisé en ce que** la base (20) comporte une bordure de retenue (21) se projetant en saillie de la base (20), la dite première pièce (11) étant clippée entre l'épaulement (22) et la bordure de retenue (21).

9. Plot de fixation (12) selon les revendications 7 et 8, **caractérisé en ce que** l'ouverture (14) et la base (20) ont des formes complémentaires et présentent une dissymétrie par rapport à un plan perpendiculaire à la direction privilégiée (X).

## Patentansprüche

1. Befestigungsklotz (12), der auf einem ersten Teil (11) montiert ist und eine erste Aufnahme (15) aufweist, welche ein komplementäres Element (13) eines zweiten Teils (10) aufnimmt, und eine zweite Aufnahme (16), die mit der ersten Aufnahme (15) über einen Durchgang (17) verbunden ist, und welche vorgelagert zur ersten Aufnahme (15) gemäß einer Hauptrichtung (X) angeordnet ist, wobei das komplementäre Element (13) sich von der ersten Aufnahme (15) verstellen kann, um die zweite Aufnahme (16) einzunehmen, unter einem Durchqueren des Durchgangs (17), wenn es einer Kraft, gemäß der Hauptrichtung (X) von einer Größe, welche eine vorbestimmte Schwelle überschreitet, ausgesetzt ist, **dadurch gekennzeichnet, dass** die zweite Aufnahme (16) den Klotz (12) von Seite zu Seite durchquert und mindestens teilweise auf Höhe eines ihrer Enden durch einen Deckel (27) abgedeckt ist.

2. Befestigungsklotz (12) nach Anspruch 1, **dadurch gekennzeichnet, dass** er aus einem Stück ist und aus einem elastischen Material gebildet ist.

3. Befestigungsklotz (12) nach Anspruch 1 oder 2, **dadurch gekennzeichnet, dass** die erste (15) und zweite (16) Aufnahme Bohrungen sind und das komplementäre Element (13) ein Metallstück (frz. *pion*) ist.

4. Befestigungsklotz (12) nach Anspruch 3, **dadurch gekennzeichnet, dass** der Durchgang (17) eine Aussparung ist, welche die zwei Bohrungen (15, 16) verbindet, und deren gerader Abschnitt gemäß der Hauptrichtung (X) mindestens teilweise von geringeren Abmessungen als denjenigen des Metallstücks (13) ist.

5. Befestigungsklotz (12) nach Anspruch 4, **dadurch gekennzeichnet, dass** das Metallstück (13) die Aussparung (17) verformen wird, wenn es einer Kraft gemäß der Hauptrichtung (X) von einer Größe ausgesetzt ist, welche die vorbestimmte Schwelle überschreitet.

6. Befestigungsklotz (12) nach irgendeinem der Ansprüche 1 bis 5, **dadurch gekennzeichnet, dass** er mindestens eine zusätzliche Aussparung (18, 21) aufweist, die ihn mindestens teilweise durchquert.

7. Befestigungsklotz (12) nach irgendeinem der Ansprüche 1 bis 6, **dadurch gekennzeichnet, dass** er einen Hauptkörper (19) und eine Basis (20) aufweist, welche mit dem Hauptkörper (19) eine Schulter (22) bildet, wobei die Basis (20) in eine Öffnung (14) eingefügt ist, welche in dem ersten Teil (11) realisiert ist, wobei die Schulter (22) auf dem ersten Teil (11) aufliegt.

8. Befestigungsklotz (12) nach Anspruch 7, **dadurch gekennzeichnet, dass** die Basis (20) einen Halterand (21) aufweist, der sich vorragend von der Basis (20) erstreckt, wobei der erste Teil (11) zwischen der Schulter (22) und dem Halterand (21) eingeklipst (frz. *clippée*) ist.

9. Befestigungsklotz (12) nach den Ansprüchen 7 und 8, **dadurch gekennzeichnet, dass** die Öffnung (14) und die Basis (20) komplementäre Formen aufweisen und eine Asymmetrie im Verhältnis zu einer rechtwinkligen Ebene zu der Hauptrichtung (X).

## Claims

1. Fixing block (12) mounted on a first component (11) and having a first housing (15) receiving a complementary element (13) of a second component (10), and a second housing (16) connected to the first housing (15) by a passage (17), and situated downstream of the first housing (15) in a preferred direction (X), the complementary element (13) being able to move from the first housing (15) to come to occupy the second housing (16) by passing through the passage (17) when it is subjected to a force, in the preferred direction (X), of an amplitude exceeding a set threshold, **characterized in that** the second housing (16) passes right through the block (12) and is at least partly covered at one of its ends by a covering (27).

2. Fixing block (12) according to claim 1, **characterized in that** it is in a single piece and is made of an elastic material.

3. Fixing block (12) according to claims 1 or 2, **characterized in that** the first (15) and the second (16) housings are bores, and the complementary element (13) is a pin.

4. Fixing block (12) according to claim 3, **characterized in that** the passage (17) is a cavity connecting the two bores (15, 16), the cross-section of which, in the preferred direction (X), is smaller, at least in part, than the pin (13).

5. Fixing block (12) according to claim 4, **characterized in that** the pin (13) deforms the cavity (17) when it is subjected to a force, in the preferred direction (X), which is of an amplitude exceeding the set threshold.

6. Fixing block (12) according to any one of claims 1 to 5, **characterized in that** it has at least one additional cavity (18, 21) at least partly passing through it.

7. Fixing block (12) according to any one of claims 1 to 6, **characterized in that** it has a main body (19) and a base (20) forming with the main body (19) a shoulder (22), the base (20) being inserted into an opening (14) made in the first component (11), the shoulder (22) coming to bear on said first component (11).

8. Fixing block (12) according to claim 7, **characterized in that** the base (20) has a retaining edge (21) projecting beyond the base (20), said first component (11) being clipped between the shoulder (22) and the retaining edge (21).

9. Fixing block (12) according to claims 7 and 8, **characterized in that** the opening (14) and the base (20) have complementary shapes and are asymmetrical in relation to a plane perpendicular to the preferred direction (X).
